# FASCICULE DE BREVET EUROPEEN

(11) **EP 1 904 714 B1**
(45) Date de publication et mention de la délivrance du brevet: **16.02.2011**
(21) Numéro de dépôt: 06778846.3
(22) Date de dépôt: 10.07.2006
(51) Int. Cl.: E21B 17/01, E21B 43/01, F16L 1/00

(54) **METHODE ET INSTALLATION DE RACCORDEMENT D'UNE CONDUITE SOUS-MARINE RIGIDE ET D'UNE CONDUITE SOUS-MARINE FLEXIBLE**
VERFAHREN UND ANLAGE ZUR VERBINDUNG EINES STARREN UNTERWASSERROHRES UND EINES FLEXIBLEN UNTERWASSERROHRES
METHOD AND INSTALLATION FOR CONNECTING A RIGID SUBMARINE PIPELINE AND A FLEXIBLE SUBMARINE PIPELINE

(30) Priorité: 11.07.2005 FR 0507382
(43) Date de publication de la demande: 02.04.2008
(73) Titulaire: Technip France, 92400 Courbevoie (FR)
(72) Inventeur: ESPINASSE, Philippe, F-76420 Bihorel (FR); BIAGGI,Jean-Pascal, F-78170 La Celle Saint Cloud (FR)
(74) Mandataire: Bertrand, Didier
(86) Numéro de dépôt international: PCT/FR2006/001676
(87) Numéro de publication internationale: WO 2007/006963

(56) Documents cités:
- EP-A- 1 035 011
- WO-A-98/12411
- WO-A-03/095788
- US-A- 4 906 137
- US-A- 5 582 252
- US-A- 6 109 830
- US-A1- 2003 086 763

## Description

La présente invention se rapporte à une méthode de raccordement d'une conduite sous-marine rigide et d'une conduite sous-marine flexible, ainsi qu'à une installation adaptée à la mise en oeuvre de cette méthode de raccordement.

Ces conduites sous-marines sont destinées au transport des hydrocarbures en milieu marin, et notamment pour véhiculer les hydrocarbures entre une installation sous-marine installée sur un fond marin et une installation marine de surface, par exemple une plate-forme, située à la surface du milieu marin.

La conduite sous-marine rigide est étendue sur le fond marin à partir de l'installation sous-marine et elle se termine par une extrémité libre de raccordement. La conduite sous-marine flexible quant à elle, présente une portion de fond qui s'étend sur le fond marin et une portion suspendue qui est destinée à rejoindre l'installation de surface. La portion de fond est terminée par une extrémité d'entrée qui est raccordé à l'extrémité libre de raccordement de telle sorte que la portion suspendue s'étend en caténaire en surplomb de l'extrémité libre de raccordement. En outre, l'installation comporte des moyens d'ancrage pour maintenir la portion de fond ancrée dans le fond marin en un point d'ancrage de la portion de fond de manière à permettre à cette portion de fond de former une ondulation décollée du fond marin, entre le point d'ancrage et la portion suspendue, et par là, d'éviter les impacts de cette portion de fond sur le fond marin lorsque la position verticale de l'installation de surface fluctue.

On pourra notamment se référer au document FR 2 746 977, lequel décrit une telle installation. Le document WO 03/095788 decrit une méthode de raccordement d'une conduite sous-marine rigide et d'une conduite sous marine flexible selon le préambule de la revendication 1, et une installation correspondante selon le préambule de la revendication 6.

Cependant, dans certaines circonstances d'exploitation, les variations de température de l'hydrocarbure extrait, provoquent des déformations longitudinales de la conduite rigide et partant, le mouvement de l'extrémité libre de raccordement.

En conséquence, la portion de fond de la conduite flexible qui s'étend entre l'extrémité libre de raccordement de la conduite rigide et le point d'ancrage, est susceptible d'être entraînée en translation sur le fond marin, ce qui entraîne d'une part sa déformation intrinsèque longitudinale, et d'autre part son abrasion. Le vieillissement de cette portion de fond est alors accéléré.

En outre, la portion suspendue de conduite flexible qui s'étend en caténaire, exerce une traction longitudinale sur la conduite rigide à son extrémité libre de raccordement. Or, lorsque la conduite rigide se rétracte, notamment lorsque l'écoulement d'hydrocarbure est stoppé et que la conduite se refroidit, les efforts de rétraction s'opposent aux efforts de traction exercés par la conduite flexible, de telle sorte que la conduite rigide risque d'être endommagée. Alors qu'il était envisageable auparavant, pour les installations sous-marines de faible et de moyenne profondeur, d'intervenir aisément sur la conduite rigide endommagée, cette intervention n'est plus envisageable pour les installations sous-marines à très grande profondeur.

Un problème qui se pose alors, et que vise à résoudre la présente invention, est de proposer une méthode de raccordement, qui permette de s'affranchir des inconvénients précités, et notamment qui permette d'éviter les interventions à grande profondeur.

Dans le but de résoudre ce problème, la présente invention propose, selon un premier aspect, une méthode de raccordement d'une conduite sous-marine rigide et d'une conduite sous-marine flexible, lesdites conduites sous-marines étant destinées au transport d'hydrocarbures en milieu marin entre une installation sous-marine installée sur un fond marin et une installation marine de surface située à la surface dudit milieu marin, ladite conduite sous-marine rigide s'étendant sur ledit fond marin à partir de ladite installation sous-marine et se terminant par une extrémité libre de raccordement, ladite conduite sous-marine flexible présentant une portion de fond étendue au voisinage dudit fond marin et une portion suspendue destinée à rejoindre ladite installation marine de surface, ladite portion de fond étant terminée par une extrémité d'entrée, ladite méthode de raccordement étant du type selon laquelle on raccorde ladite extrémité d'entrée et ladite extrémité libre de raccordement en étendant ladite portion suspendue en caténaire sensiblement au droit du voisinage de ladite extrémité libre de raccordement et en maintenant ancrée ladite portion de fond dans ledit fond marin en un point d'ancrage de ladite portion de fond pour autoriser ladite portion de fond à former une ondulation déformable ; et selon ladite méthode, on autorise la formation ladite ondulation entre ledit point d'ancrage et ladite extrémité libre de raccordement de façon à permettre le mouvement relatif de ladite extrémité libre de raccordement par rapport audit point d'ancrage et la déformation de ladite ondulation.

Ainsi, une caractéristique de l'invention réside dans la mise en oeuvre de l'ondulation de la portion de fond de la conduite flexible, entre le point d'ancrage et l'extrémité libre de raccordement de la conduite rigide, lorsqu'un hydrocarbure chaud s'écoule dans la conduite rigide et qu'elle s'allonge, le point d'ancrage étant bien évidemment par nature, en position fixe dans un plan moyen défini par le fond marin. De la sorte, les variations longitudinales et transversales de la conduite rigide qui sont dues à l'écoulement irrégulier d'un hydrocarbure chaud dans cette conduite, et/ou aux variations de pression, et qui provoquent le mouvement alternatif de la conduite et par conséquent de l'extrémité libre de raccordement sur le fond marin, avec des amplitudes de l'ordre du mètre par exemple, sont répercutées dans la portion de fond ondulée dont le rayon de courbure varie alors sensiblement, sans affecter l'intégrité de cette portion de fond. Ainsi, la conduite rigide se déforme librement, sans contrainte et ne risque pas d'être endommagée, de sorte qu'aucune intervention n'est plus nécessaire pour la réparer. En outre, cette méthode est d'une mise en oeuvre aisée, et elle nécessite qu'un seul raccordement entre la conduite flexible et la conduite rigide, ce qui la rend économiquement avantageuse.

Par ailleurs, et selon un mode de mise en oeuvre particulièrement avantageux, on relie ledit point d'ancrage, par exemple à une pile d'ancrage installée le long de ladite conduite rigide par l'intermédiaire d'une ligne d'ancrage flexible de manière à faciliter le raccordement. Car en effet, il suffit pour former l'ondulation, d'étendre la conduite flexible de manière sensiblement asymptotique entre l'extrémité libre de raccordement et l'installation de surface, puis de relier avec une ligne d'ancrage, la pile d'ancrage et le point d'ancrage de la conduite flexible située alors à distance du fond marin, et ensuite de descendre plus encore la conduite flexible vers le front marin pour que l'ondulation se forme entre le point d'ancrage de la portion de fond et la pile d'ancrage.

Toutefois, selon une autre alternative, la ligne d'ancrage est étendue au préalable, avant la mise en service de l'installation, le long de la conduite flexible, de telle manière que l'ondulation ne se forme que lorsque la conduite rigide s'allonge sous l'effet de l'écoulement d'un hydrocarbure chaud. Car en effet, la conduite rigide est initialement à sa longueur minimale.

Selon une caractéristique avantageuse, on équipe ladite portion de fond formant ondulation de limiteurs de courbure, sur la portion de front située entre l'extrémité libre de raccordement et le point d'ancrage, pour limiter la courbure de ladite ondulation, et en particulier pour autoriser une courbure régulière et éviter les plis.

Avantageusement, ces limiteurs de courbure formant des manchons qui entourent la portion de fond, on forme ladite ondulation sensiblement dans un plan horizontal, de telle sorte que les manchons peuvent éventuellement prendre appui sur le fond marin et préserver de l'abrasion la conduite flexible.

Selon un autre mode de mise en oeuvre, on forme ladite ondulation sensiblement dans un plan vertical en équipant ladite portion de fond avec des bouées, et on évite ainsi tout contact avec le fond marin tout en autorisant une variation régulière du rayon de courbure de la portion de fond.

Selon un autre aspect, la présente invention propose une installation de raccordement d'une conduite sous-marine rigide et d'une conduite sous-marine flexible, lesdites conduites sous-marines étant destinées au transport d'hydrocarbures en milieu marin entre une installation sous-marine installée sur un fond marin et une installation marine de surface située à la surface dudit milieu marin, ladite conduite sous-marine rigide s'étendant sur ledit fond marin à partir de ladite installation sous-marine et se terminant par une extrémité libre de raccordement, ladite conduite sous-marine flexible présentant une portion de fond étendue au voisinage dudit fond marin et une portion suspendue destinée à rejoindre ladite installation marine de surface, ladite portion de fond étant terminée par une extrémité d'entrée, ladite extrémité d'entrée et ladite extrémité libre de raccordement étant raccordées ensemble de façon que ladite portion suspendue s'étende en caténaire sensiblement au droit du voisinage de ladite extrémité libre de raccordement, ladite installation comportant des moyens d'ancrage pour maintenir ladite portion de fond ancrée dans ledit fond marin en un point d'ancrage de ladite portion de fond et de façon à autoriser ladite portion de fond à former une ondulation déformable ; selon l'invention, lesdits moyens d'ancrage sont adaptés à maintenir ledit point d'ancrage à distance et rapproché de ladite extrémité libre de raccordement pour autoriser la formation de ladite ondulation entre ledit point d'ancrage et ladite extrémité libre de raccordement.

Ainsi qu'on l'expliquera ci-après, plus en détail, lesdits moyens d'ancrage comprennent avantageusement, un organe de clampage monté sur ladite portion de fond audit point d'ancrage et une pile d'ancrage installée le long de ladite conduite rigide, et ledit organe de clampage est relié à ladite pile d'ancrage au moyen d'une ligne d'ancrage, par exemple durant la mise en oeuvre de la méthode d'installation précitée, afin d'autoriser aisément la formation de l'ondulation.

En outre, de manière préférentielle ladite portion de fond formant ondulation est équipée de limiteurs de courbure ou encore, elle comprend une pluralité de bouées installées de proche en proche sur ladite portion de fond, entre ledit point d'ancrage et ladite extrémité libre de raccordement pour former ladite ondulation sensiblement dans un plan vertical, ce qui permet d'obtenir une courbure sensiblement régulière et au surplus, de décoller la portion de fond par rapport au fonds marin et éviter toute abrasion.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 est une vue schématique partielle d'une installation de raccordement selon une première variante, conforme à l'invention
- la Figure 2A est une vue schématique partielle en coupe longitudinale d'un élément de détail d'une installation de raccordement selon une seconde variante et dans une première position ; et,
- la Figure 2B est une vue schématique partielle de l'élément de détail illustré à la Figure 2A dans une seconde position.

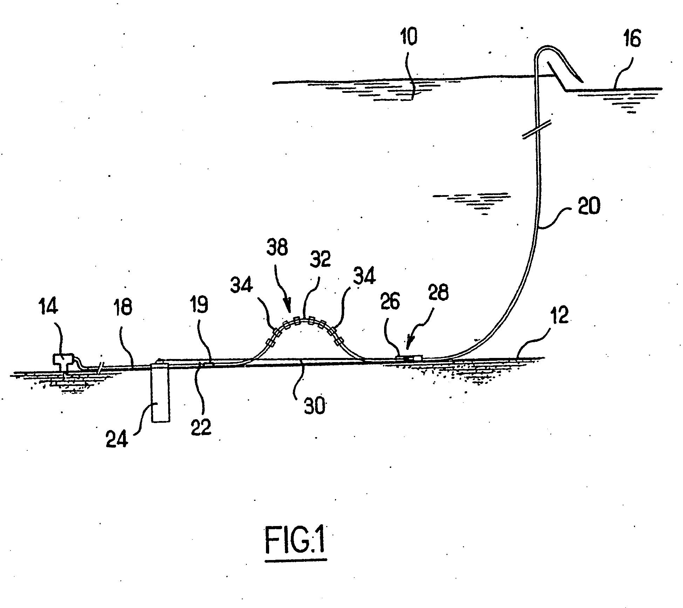

La Figure 1, montre de façon schématique et en coupe verticale, un milieu marin présentant une surface 10 et un fond 12 ; une installation sous-marine 14 installée sur le fond 12 étant destinée à l'extraction d'un hydrocarbure, et une installation de surface 16 étant destinée à récupérer et à stocker l'hydrocarbure. Entre l'installation sous-marine 14 et l'installation de surface 16, une conduite rigide 18 qui s'étend sur le fond marin 12 à partir de l'installation sous-marine 14 et une conduite flexible 20 qui y est raccordée par une extrémité d'entrée 19 et la prolonge, rejoint l'installation de surface 16, et permettent ensemble de récupérer l'hydrocarbure.

La conduite rigide 18 présente une extrémité libre de raccordement 22, et est susceptible de se déformer longitudinalement sous l'effet des variations de pression de l'hydrocarbure et/ou de température de la conduite, provoquées par les variations de débit d'un hydrocarbure chaud par rapport à la température du milieu marin dans le fond 12. En conséquence, l'extrémité libre de raccordement 22 est susceptible, en cours d'exploitation de l'installation sous-marine 14, d'être entraînée en translation avec des amplitudes de l'ordre du mètre.

Afin de surmonter le problème que pose cette variation dimensionnelle, on installe notamment, une pile d'ancrage 24 le long de la conduite rigide 18 en retrait de l'extrémité libre de raccordement 22, on monte un organe de clampage 26 sur un point d'ancrage 28 de la conduite flexible 20 et, lorsque l'on descend la conduite flexible 20 dans le milieu marin, selon un mode de mise en oeuvre particulier, on relie l'organe de clampage 26 et la pile d'ancrage 24 au moyen d'une ligne d'ancrage 30 tendue formant alors une corde, tandis qu'une portion de fond 32 de la conduite flexible 20 s'étend en arc entre l'extrémité d'entrée 19 située au niveau du fond marin 12 et le point d'ancrage 28. En outre, et au préalable, cette portion de fond 32 en arc, est équipée ici, de bouées 34 réparties de façon sensiblement équidistante entre l'extrémité d'entrée 19 et le point d'ancrage 28.

Ensuite, au cours de l'installation lorsque la conduite flexible 20 est déroulée plus encore sur le fond marin 12, le point d'ancrage 28 tend à venir s'appuyer sur le fond marin 12, en restant à une distance constante de la pile d'ancrages 24 grâce à la ligne d'ancrage 30 qui le retient, de telle sorte que la portion de fond 32, équipée des bouées 34 est naturellement entraînée vers la surface 10 en formant une ondulation 38, puisque la longueur de conduite, essentiellement flexible, est supérieure à la longueur de la ligne d'ancrage 30. L'ondulation 38 apparaît formée au regard du fond marin 12 sensiblement verticalement ainsi que l'illustre la Figure 1.

De la sorte, le point d'ancrage 28 étant maintenu à distance fixe de la pile d'ancrages 24, selon une direction moyenne définie par la conduite rigide 18 et la ligne d'ancrage 30, tout mouvement longitudinal de la conduite rigide 18 et par là même, de l'extrémité libre de raccordement 22, entraîne également l'extrémité d'entrée 19 de la conduite flexible 20 ce qui provoque alors la déformation de l'ondulation 38 de la portion de fond 32 et la variation de son rayon de courbure, tant positive que négative, sans contact avec le fond marin 12 et par conséquent sans possibilité d'abrasion.

En outre, l'extrémité libre de raccordement 22 de la conduite rigide 18 étant libre, puisque la conduite flexible est finalement ancrée dans le fond marin 12 et que sa portion de fond 32 se courbe et peut se déformer, aucune contrainte ne s'exerce donc sur elle et lorsqu'elle se rétracte, elle ne peut se détériorer.

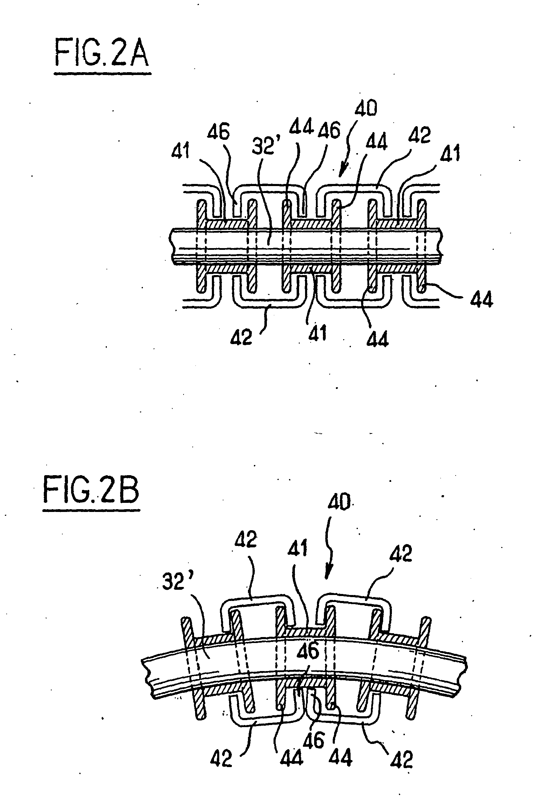

Selon une seconde variante, la portion de fond 32' que l'on retrouve partiellement et agrandie sur les figures 2A et 2B est équipée de limiteurs de courbure 40 comprenant des manchons tubulaires 41 et des organes tubulaires 42 formant agrafes, destinés à relier entre eux les manchons tubulaires 41. Les manchons tubulaires 41, enserrés sur la portion de fond 32', présentent à chacune de leurs extrémités une collerette radiale 44, et ils sont installés de proche en proche le long de la portion de fond 32', collerettes radiales 44 en regard. Par ailleurs, les organes tubulaires 42 présentent, à chacune de leurs extrémités, une partie resserrée 46 adaptée à venir s'engager autour des manchons tubulaires 41 et derrière la collerette radiale 44. Ainsi, un organe tubulaire 42 présente deux extrémités dont la partie resserrée 46 est engagée respectivement autour d'un manchon tubulaire 41, de façon à relier ensemble deux manchons tubulaires 41 contigus en entourant et en recouvrant entièrement la portion de fond 32'. Ainsi, une pluralité de manchons tubulaires et d'organes tubulaires montés ensemble autour de la portion de fond 32', permet de réaliser une gaine articulée, à la fois protectrice et à possibilité de courbure limitée.

De la sorte, et ainsi que l'illustre la figure 2B, dès lors que la portion de fond 32' s'incurve, alors que les parties resserrées 46 des extrémités des organes tubulaires 42, viennent en appui l'une contre l'autre dans une portion de contact de leur circonférence, et entre les collerettes radiales 44 d'un même manchon tubulaire 41, leurs portions respectivement diamétralement opposées, viennent, elles en appui contre les collerettes radiales 44. En conséquence, la courbure de la portion de fond 32' est limitée, et ne peut être inférieur à un rayon de courbure déterminé.

Ainsi équipée, la portion de fond 32', sans être nécessairement munie de bouées, peut alors former une ondulation en demeurant en appui sur le fond marin, protégée qu'elle est par les organes tubulaires 42 qui eux sont directement en contact et en appui sur le fond marin 12. De la sorte, les variations dimensionnelles de la conduite rigide 18, sont susceptibles de provoquer la déformation de l'ondulation formée par la portion de fond 32', qui, en appui sur le fond marin 12, est d'une part protégée de l'abrasion par les organes tubulaires 42, et d'autre part est préservée d'un pliage intempestif grâce à la coopération des organes tubulaires 42 et des manchons tubulaires 41.

## Revendications

1. Méthode de raccordement d'une conduite sous-marine rigide (18) et d'une conduite sous-marine flexible (20), lesdites conduites sous-marines étant destinées au transport d'hydrocarbures en milieu marin entre une installation sous-marine (14) installée sur un fond marin (12) et une installation marine de surface (16) située à la surface (10) dudit milieu marin, ladite conduite sous-marine rigide (18) s'étendant sur ledit fond marin (12) à partir de ladite installation sous-marine (14) et se terminant par une extrémité libre de raccordement (22), ladite conduite rigide (18) étant susceptible de se déformer longitudinalement en entraînant ladite extrémité libre de raccordement (22) en translation sur le fond marin, ladite conduite sous-marine flexible (20) présentant une portion suspendue destinée à rejoindre ladite installation marine de surface (16); **caractérisée en ce que** ladite conduite sous-marine flexible (20) présente une portion de fond (32) étendue au voisinage dudit fond marin (12), ladite portion de fond (32) étant terminée par une extrémité d'entrée (19), ladite méthode de raccordement étant du type selon laquelle on raccorde ladite extrémité d'entrée (19) et ladite extrémité libre de raccordement (22) en étendant ladite portion suspendue en caténaire sensiblement au droit du voisinage de ladite extrémité libre de raccordement ;
méthode selon laquelle on maintient ladite portion de fond (32) ancrée dans ledit fond marin (12) en un point d'ancrage (28) de ladite portion de fond, tandis qu'on raccorde ladite extrémité d'entrée (19) et ladite extrémité libre de raccordement (22), de manière à autoriser ladite portion de fond à former une ondulation déformable (38) entre ledit point d'ancrage (28) et ladite extrémité libre de raccordement (22) de façon à permettre le mouvement relatif de ladite extrémité libre de raccordement par rapport audit point d'ancrage (28) et la déformation de ladite ondulation.

2. Méthode de raccordement selon la revendication 1, **caractérisée en ce qu'**on relie ledit point d'ancrage (28) à une pile d'ancrage (24) installée le long de ladite conduite rigide (18) par l'intermédiaire d'une ligne d'ancrage (30) flexible.

3. Méthode de raccordement selon la revendication 1 ou 2, **caractérisée en ce qu'**on équipe ladite portion de fond (32) formant ondulation (38) de limiteurs de courbure pour limiter la courbure de ladite ondulation (38).

4. Méthode de raccordement selon l'une quelconque des revendications 1 à 3, **caractérisée en ce qu'**on forme ladite ondulation (38) sensiblement dans un plan horizontal

5. Méthode de raccordement selon l'une quelconque des revendications 1 à 3, **caractérisée en ce qu'**on forme ladite ondulation (38) sensiblement dans un plan vertical en équipant ladite portion de fond avec des bouées (34).

6. Installation de raccordement d'une conduite sous-marine rigide (18) et d'une conduite sous-marine flexible (20), lesdites conduites sous-marines étant destinées au transport d'hydrocarbures en milieu marin entre une installation sous-marine (14) installée sur un fond marin (12) et une installation marine de surface (16) située à la surface dudit milieu marin, ladite conduite sous-marine rigide (18) s'étendant sur ledit fond marin (12) à partir de ladite installation sous-marine (14) et se terminant par une extrémité libre de raccordement (22), ladite conduite rigide (18) étant susceptible de se déformer longitudinalement en entraînant ladite extrémité libre de raccordement (22) en translation sur le fond marin, ladite conduite sous-marine flexible (20) présentant une portion suspendue destinée à rejoindre ladite installation marine de surface (16); **caractérisée en ce que** ladite conduite sous-marine flexible (20) présente une portion de fond (32) étendue au voisinage dudit fond marin, ladite portion de fond étant terminée par une extrémité d'entrée (19), ladite extrémité d'entrée et ladite extrémité libre de raccordement (22) étant raccordées ensemble de façon que ladite portion suspendue s'étende en caténaire sensiblement au droit du voisinage de ladite extrémité libre de raccordement ;
ladite installation comportant des moyens d'ancrage (26, 24, 30) pour maintenir ladite portion de fond (32) ancrée dans ledit fond marin en un point d'ancrage (28) de ladite portion de fond, ledit point d'ancrage (26, 24, 30) étant maintenu à distance et rapproché de ladite extrémité libre de raccordement (22) de manière à autoriser ladite portion de fond à former une ondulation déformable (38) entre ledit point d'ancrage (28) et ladite extrémité libre de raccordement (22).

7. Installation de raccordement selon la revendication 6, **caractérisée en ce que** lesdits moyens d'ancrage (26, 24, 30) comprennent un organe de clampage (26) monté sur ladite portion de fond (32) audit point d'ancrage (28) et une pile d'ancrage (24) installée le long de ladite conduite rigide (18), et **en ce que** ledit organe de clampage est relié à ladite pile d'ancrage au moyen d'une ligne d'ancrage (30).

8. Installation de raccordement selon la revendication 6 ou 7, **caractérisée en ce que** ladite portion de fond (32) formant ondulation (38) est équipée de limiteurs de courbure (40).

9. Installation de raccordement selon l'une quelconque des revendications 6 à 8, **caractérisée en ce qu'**elle comprend une pluralité de bouées (34) installées de proche en proche sur ladite portion de fond (32), entre ledit point d'ancrage (28) et ladite extrémité libre de raccordement (22) pour former ladite ondulation (38) sensiblement dans un plan vertical.

## Claims

1. Method of connecting a rigid submarine pipe (18) and a flexible submarine pipe (20), the said submarine pipes being designed to transport hydrocarbons in a marine environment between a submarine installation (14) installed on a seabed (12) and a surface marine installation (16) situated on the surface (10) of the said marine environment, the said rigid submarine pipe (18) lying on the said seabed (12) from the said submarine installation (14) and terminating in a free connection end (22), the said rigid pipe (18) being capable of longitudinal deformation which causes the said free connection end (22) to slide on the said seabed, the said flexible submarine pipe (20) having a suspended portion designed to join the said surface marine installation (16), **characterized in that** the said flexible submarine pipe (20) have a flow-line portion (32) lying in the vicinity of the said seabed (12), the said flow-line portion (32) being terminated in an input end (19), the said connection method being of the type according to which the said input end (19) and the said free connection end (22) are connected by laying the said suspended portion as a catenary substantially in line with the vicinity of the said free connection end;
method according to which the said flow-line portion 32) is held anchored in the said seabed (12) at an anchor point (28) of the said flow-line portion, while the said input end (19) and the said free connection end (22) are connected, to allow the said flow-line portion to form a deformable undulation (38) between the said anchor point (28) and the said free connection end (22) so as to allow the relative movement of the said free connection end relative to the said anchor point (28) and the deformation of the said undulation.

2. Connection method according to Claim 1, **characterized in that** the said anchor point (28) is connected to an anchor pile (24) installed along the said rigid pipe (18) by means of a flexible anchor line (30).

3. Connection method according to Claim 1 or 2, **characterized in that** the said flow-line portion (32) forming an undulation (38) is fitted with bend limiters to limit the bend of the said undulation (38).

4. Connection method according to any one of Claims 1 to 3, **characterized in that** the said undulation (38) is formed substantially in a horizontal plane.

5. Connection method according to any one of Claims 1 to 3, **characterized in that** the said undulation (38) is formed substantially in a vertical plane by fitting the said flow-line portion with buoys (34).

6. Installation for connecting a rigid submarine pipe (18) and a flexible submarine pipe (20), the said submarine pipes being designed to transport hydrocarbons in a marine environment between a submarine installation (14) installed on a seabed (12) and a surface marine installation (16) situated on the surface of the said marine environment, the said rigid submarine pipe (18) lying on the said seabed (12) from the said submarine installation (14) and terminating in a free connection end (22), the said rigid pipe (18) being capable of longitudinal deformation which causes the said free connection end (22) to slide on the said seabed, the said flexible submarine pipe (20) having a suspended portion designed to join the said surface marine installation (16), **characterized in that** the said flexible submarine pipe (20) have a flow-line portion (32) lying in the vicinity of the said seabed, the said flow-line portion being terminated in an input end (19), the said input end and the said free connection end (22) being connected together so that the said suspended portion lies as a catenary substantially in line with the vicinity of the said free connection end, the said installation comprising anchoring means (26, 24, 30) to hold the said flow-line portion (32) anchored in the said seabed at an anchor point (28) of the said seabed, the said anchor point (26, 24, 30) being held at a distance and close to the said free connection end (22) so as to allow the said flow-line portion to form a deformable undulation (38) between the said anchor point (28) and the said free connection end (22).

7. Connection installation according to Claim 6, **characterized in that** the said anchoring means (26, 24, 30) comprise a clamping member (26) mounted on the said flow-line portion (32) at the said anchor point (28) and an anchor pile (24) installed along the said rigid pipe (18), and **in that** the said clamping member is connected to the said anchor pile by means of an anchor line (30).

8. Connection installation according to Claim 6 or 7, **characterized in that** the said flow-line portion (32) forming an undulation (38) is fitted with bend limiters (40).

9. Connection installation according to any one of Claims 6 to 8, **characterized in that** it comprises a plurality of buoys (34) installed step by step on the said flow-line portion (32), between the said anchor point (28) and the said free connection end (22) to form the said undulation (38) substantially in a vertical plane.

## Patentansprüche

1. Verfahren zur Verbindung einer starren Unterwasser-Rohrleitung (18) und einer flexiblen Unterwasser-Rohrleitung (20), wobei die Unterwasser-Rohrleitungen für den Transport von Kohlenwasserstoffen in Meeresumgebung zwischen einer Unterwasser-Anlage (14), die auf einem Meeresboden (12) installiert ist, und einer Meeresoberflächen-Anlage (16), die an der Oberfläche (10) der Meeresumgebung angeordnet ist, vorgesehen sind, wobei sich die starre Unterwasser-Rohrleitung (18) von der Unterwasser-Anlage (14) ausgehend über den Meeresboden (12) erstreckt und über ein freies Verbindungsende (22) endet, wobei die starre Rohrleitung (18) in Längsrichtung verformbar ist, indem das freie Verbindungsende (22) zur Verschiebung auf dem Meeresboden angetrieben wird, wobei die flexible Unterwasser-Rohrleitung (20) einen hängenden Abschnitt aufweist, der dafür vorgesehen ist, auf die Meeresoberflächen-Anlage (16) zu treffen, **dadurch gekennzeichnet, dass** die flexible Unterwasser-Rohrleitung (20) einen in der Nähe des Meeresbodens (12) liegenden Bodenabschnitt (32) aufweist, wobei der Bodenabschnitt (32) über ein Eingangsende (19) endet, wobei das Verbindungsverfahren von dem Typ ist, demzufolge man das Eingangsende (19) und das freie Verbindungsende (22) verbindet, indem der frei hängende Abschnitt im Wesentlichen rechtwinklig zu der Nähe des freien Verbindungsendes gespannt wird,
wobei man den Bodenabschnitt (32) in einem Verankerungspunkt (28) des Bodenabschnitts in dem Meeresboden (12) verankert hält, während man das Eingangsende (19) und das freie Verbindungsende (22) verbindet, derart, dass es dem Bodenabschnitt ermöglicht wird, eine verformbare Wellung (3) zwischen dem Verankerungspunkt (28) und dem freien Verbindungsende (22) zu bilden, so dass die relative Bewegung des freien Verbindungsendes relativ zu dem Verankerungspunkt (28) und die Verformung der Wellung ermöglicht wird.

2. Verbindungsverfahren nach Anspruch 1, **dadurch gekennzeichnet, dass** man den Verankerungspunkt (28) mit einem Verankerungspfosten (24) verbindet, der entlang der starren Rohrleitung (18) über eine flexible Verankerungsleine (30) installiert ist.

3. Verbindungsverfahren nach Anspruch 1 oder 2, **dadurch gekennzeichnet, dass** man den die Wellung (38) bildenden Bodenabschnitt (32) mit Krümmungsbegrenzern versieht, um die Krümmung der Wellung (38) zu begrenzen.

4. Verbindungsverfahren nach einem der Ansprüche 1 bis 3, **dadurch gekennzeichnet, dass** man die Wellung (38) im Wesentlichen in einer horizontalen Ebene bildet.

5. Verbindungsverfahren nach einem der Ansprüche 1 bis 3, **dadurch gekennzeichnet, dass** man die Wellung (38) im Wesentlichen in einer vertikalen Ebene bildet, indem der Bodenabschnitt mit Bojen (34) versehen wird.

6. Einrichtung zur Verbindung einer starren Unterwasser-Rohrleitung (18) und einer flexiblen Unterwasser-Rohrleitung (20), wobei die Unterwasser-Rohrleitungen für den Transport von Kohlenwasserstoffen in Meeresumgebung zwischen einer Unterwasser-Anlage (14), die auf einem Meeresboden (12) installiert ist, und einer Meeresoberflächen-Anlage (16), die an der Oberfläche der Meeresumgebung angeordnet ist, vorgesehen sind, wobei sich die starre Unterwasser-Rohrleitung (18) von der Unterwasser-Anlage (14) ausgehend über den Meeresboden (12) erstreckt und über ein freies Verbindungsende (22) endet, wobei die starre Rohrleitung (18) in Längsrichtung verformbar ist, indem das freie Verbindungsende (22) zur Verschiebung auf dem Meeresboden angetrieben wird, wobei die flexible Unterwasser-Rohrleitung (20) einen hängenden Abschnitt aufweist, der dafür vorgesehen ist, auf die Meeresoberflächen-Anlage (16) zu treffen, **dadurch gekennzeichnet, dass** die flexible Unterwasser-Rohrleitung (20) einen in der Nähe des Meeresbodens (12) liegenden Bodenabschnitt (32) aufweist, wobei der Bodenabschnitt über ein Eingangsende (19) endet, wobei das Eingangsende und das freie Verbindungsende (22) derart miteinander verbunden sind, dass der hängende Abschnitt im Wesentlichen rechtwinklig zu der Nähe des freien Verbindungsendes frei gespannt ist, wobei die Einrichtung Verankerungsmittel (26, 24, 30) enthält, um den Bodenabschnitt (32) in einem Verankerungspunkt (28) des Bodenabschnitts in dem Meeresboden verankert zu halten, wobei der Verankerungspunkt (26, 24, 30) auf Abstand und dicht auf das freie Verbindungsende (22) folgend gehalten wird, derart, dass es dem Bodenabschnitt ermöglicht wird, eine verformbare Wellung (38) zwischen dem Verankerungspunkt (28) und dem freien Verbindungsende (22) zu bilden.

7. Einrichtung zur Verbindung nach Anspruch 6, **dadurch gekennzeichnet, dass** die Verankerungsmittel (26, 24, 30) ein Klemmorgan (26), das an dem Bodenabschnitt (32) im Verankerungspunkt (28) montiert ist, und einen Verankerungspfosten (24), der entlang der starren Rohrleitung (18) installiert ist, enthalten und dass das Klemmorgan mit dem Verankerungspfosten mittels einer Verankerungsleine (30) verbunden ist.

8. Einrichtung zur Verbindung nach Anspruch 6 oder 7, **dadurch gekennzeichnet, dass** der eine Wellung (38) bildende Bodenabschnitt (32) mit Krümmungsbegrenzern (40) versehen ist.

9. Einrichtung zur Verbindung nach einem der Ansprüche 6 bis 8, **dadurch gekennzeichnet, dass** sie eine Vielzahl von Bojen (34) enthält, die zwischen dem Verankerungspunkt (28) und dem freien Verbindungsende (22) nach und nach an dem Bodenabschnitt (32) installiert sind, um die Wellung (38) im Wesentlichen in einer vertikalen Ebene zu bilden.
